# EUROPÄISCHE PATENTSCHRIFT

(11) **EP 3 688 436 B1**
(45) Veröffentlichungstag und Bekanntmachung des Hinweises auf die Patenterteilung: **08.03.2023**
(21) Anmeldenummer: 18779646.1
(22) Anmeldetag: 27.09.2018
(51) Int. Cl.: G01L 19/00

(54) **MEDIENGETRENNTER DRUCKTRANSMITTER**
MEDIA-SEPARATED PRESSURE TRANSMITTER
TRANSMETTEUR DE PRESSION ISOLÉ DU FLUIDE

(30) Priorität: 28.09.2017 DE 102017122607
(43) Veröffentlichungstag der Anmeldung: 05.08.2020
(73) Patentinhaber: TDK Electronics AG, 81671 München (DE)
(72) Erfinder: BOHL, Benjamin, 10407 Berlin (DE); IHLE, Jan, 8074 Raaba-Grambach (AT); HUNDERTMARK, Bert, 14532 Stahnsdorf (DE); POLDER, Bernd, 70182 Stuttgart (DE); WOHLGEMUTH, Christian, 12249 Berlin (DE)
(74) Vertreter: Epping - Hermann - Fischer
(86) Internationale Anmeldenummer: PCT/EP2018/076316
(87) Internationale Veröffentlichungsnummer: WO 2019/063715

(56) Entgegenhaltungen:
- WO-A1-2009/132981
- JP-A- S5 776 431
- US-A1- 2006 289 415
- US-A1- 2017 234 751
- US-B1- 7 124 640

## Beschreibung

Die Anmeldung betrifft einen mediengetrennten Drucktransmitter zum Einsatz in aggressiven, gefrierenden oder hochviskosen Medien.

Bei der Druckmessung mittels Drucksensoren in Medien unter erschwerten bzw. extremen Bedingungen kommt es vor, dass Kondensat, gefrierende oder hochviskose Medien das Messsignal der eingesetzten Drucksensoren verfälschen. Solche Medien können unter anderem heiße, viskose, dünnflüssige kalte, wässrige oder ölige Phasen, kalte dickflüssige Öle, gefrorenes Wasser oder Kraftstoff sein. Die Folgen einer verfälschten Messung können sein: Ungenügende Abgasreinigung, ein Motorschaden oder allgemein ein Schaden an anderen Elementen eines zu überwachenden Prozesses. Durch eine erhöhte Anforderung an die Abgasreinhaltung von Verbrennungsmotoren ist es z.B. notwendig, direkt nach einem Motorkaltstart exakte Druckmessungen in verschiedenen Medien durchzuführen.

Das Dokument US 7,124,640 B1 beschreibt eine Druckwandler Baugruppe mit einem Sensor und einer Heizeinrichtung. Der Sensor weist eine metallische flexible Membran und eine Elektrode auf, wobei die Elektrode einen Keramikblock und eine leitende Platte umfasst.

Das Dokument JP S5776431 A beschreibt ein druckempfindliches Element mit einem druckempfindlichen Element, das an Keramikgefäßen luftdicht befestigt ist. Heizelemente sind in den Gefäßen angeordnet, um die Temperatur des druckempfindlichen Elements so zu steuern, dass es auf 50° C gehalten wird.

Das Dokument WO/2009132981 A1 beschreibt einen Drucksensor mit einem Keramiksubstrat, in dem ein Messelement angeordnet ist. Das Messelement weist einen Kontakt mit einem Hohlraum auf, der durch das Substrat, eine Zwischenschicht und eine erste Membran gebildet wird.

Das Dokument US 2006/289415 A1 beschreibt ein mikromechanisches Sensorelement, das mit einem Substrat verbunden ist. Das Sensorelement kann mit einer Membran und einem unter der Membran liegenden Hohlraum ausgestattet sein. Zum Schutz des Sensorelements vor Beschädigung kann das Sensorelement in einem Gehäuse untergebracht werden. Ein Innenraum des Gehäuses kann mit einem Passivierungsmittel, beispielsweise einem Gel, wenigstens teilweise aufgefüllt werden. Es können Heizelemente vorgesehen sein, die einen direkten Kontakt mit dem Passivierungsmittel aufweisen.

Das Dokument US 2017/234751 A1 beschreibt eine Druckdetektionseinheit mit einer Keramik-Basis, einem Aufnahmeelement, das der Basis zugewandt ist, und einer Membran. Die Basis hat eine Form, bei der ein zentraler Teil davon so vertieft ist, dass ein Druckaufnahmeraum gebildet wird, der mit einem flüssigen Medium mit einer isolierenden Eigenschaft wie Öl gefüllt ist.

Es ist Aufgabe der vorliegenden Erfindung, einen Drucksensor anzugeben, der die oben genannten Probleme vermeidet und beispielsweise bereits zeitnah zu einem Motorkaltstart eine korrekte Druckmessung in einem motorrelevanten Medium durchführen und die Lebensdauer des Drucksensors erhöhen kann. Insbesondere soll der Drucksensor für die Druckmessung von aggressiven Medien geeignet sein.

Die Aufgabe wird durch einen Drucktransmitter gemäß dem vorliegenden Anspruch 1 gelöst. Abhängige Ansprüche geben vorteilhafte Ausführungen an.

Zur Lösung der Aufgabe wird ein Drucktransmitter vorgeschlagen, mit dem es möglich ist einen Differenz-, Relativ- oder Absolutdruck zu messen. Dieser umfasst ein Gehäuse, welches wiederum eine Gehäusewand umfasst. Die Gehäusewand kann für eine Messung des Absolutdrucks abgedichtet sein oder für eine Messung eines Relativdrucks oder Differenzdrucks Öffnungen enthalten, um z.B. Atmosphärenbedingungen als Referenzdruck zu verwenden. In dem Gehäuse sind angeordnet: ein Sensorelement, ein Keramiksubstrat und ein Druckanschlussstutzen.

Das Sensorelement ist ein Bauteil, mit dem eine druckbedingte Auslenkung einer Membran bestimmt wird. Es kann in verschiedenen technischen Varianten ausgeführt sein: z.B. eine direkte Druckbestimmung über Nutzung des Piezoeffekts oder über Messung der Dehnung der Membran mithilfe von z.B. Widerstandselementen.

Für die Orientierung des Sensorelements wird im Folgenden die Seite des Sensorelements, an der sich die Membran befindet, als Oberseite des Sensorelements bezeichnet und die gegenüberliegende Seite als Unterseite des Sensorelements. An der Unterseite befindet sich im Sensorelement ein Medienzugang, der die Membran von der Unterseite her für das Druck führende Medium zugänglich macht. Das Sensorelement kann als MEMS-Bauteil ausgebildet sein.

Das Keramiksubstrat dient als Träger für das Sensorelement und dessen elektrischen Anschluss. Der elektrische Anschluss kann auf der Oberseite des Keramiksubstrats angeordnet sein und dient dazu, ein Messsignal aus dem Drucksensor heraus zu leiten, wo es extern verarbeitet wird und wo dem Messsignal ein Druck zugeordnet wird.

Für die Messung des Absolutdrucks wird der Medienzugang des Sensorelements durch das Keramiksubstrat verschlossen oder das Sensorelement ist auf der Rückseite verschlossen. Auf dem Keramiksubstrat ist das Sensorelement in einer Aussparung angebracht, die mit einer Membran überspannt ist. Die Oberseite des Sensorelements, die Ausnehmung im Keramiksubstrat und die Membran umschließen dabei einen Hohlraum, der mit Öl gefüllt ist. Keramiksubstrat, Membran und Öl bilden eine Transmittereinheit, die das Sensorelement vor aggressiven Medien schützt und den Druck des Mediums im zu überwachenden System auf das Sensorelement überträgt.

Auf der Transmittereinheit ist der z.B. aus Metall geformte Druckanschlussstutzen angeordnet, in dem ein Medium, das unter Umständen aggressiv ist, zur Membran geführt wird. Der Druckanschlussstutzen ist über der Membran auf der Aussparung befestigt und ragt durch die Gehäusewand hindurch, so dass er direkt mit dem zu überwachenden System bzw. dem medienführenden System verbunden werden kann. Für die Messung des Differenzdrucks können eine zweite Transmittereinheit und ein zweiter Druckanschlussstutzen an der Unterseite des Sensorelements angebracht sein.

Soll in einem anderen Beispiel der relative Druck zur Atmosphäre gemessen werden, so ist in dem Gehäuse eine Öffnung enthalten und der auf der Unterseite angeordnete Medienzugang des Sensorelements nicht durch das Keramiksubstrat oder die unterseitige Verschließung des Sensorelements versperrt wie bei der Absolutdruckmessung.

Des Weiteren ist ein Heizelement Bestandteil des Drucktransmitters. Es kann an verschiedenen Positionen im Drucktransmitter angebracht sein mit dem Zweck, im Drucksensor eine Betriebstemperatur zu erreichen, die eine exakte Messung erlaubt. Durch das Aufheizen des Drucktransmitters werden mögliche feste und flüssige Kondensate aufgetaut, ggfs. verdampft und zusammen mit eventuell vorhandenen hochviskosen Medien aus dem Drucktransmitter ausgetrieben bzw. ausgeheizt. Mit dem Heizelement ist es auch möglich, eine Bildung von Eiskristallen zu verhindern, die das Sensorelement beschädigen oder zerstören können.

Das Heizelement ist beispielsweise dazu ausgebildet, den Drucktransmitter auf eine Temperatur deutlich oberhalb des Gefrierpunkts zu erwärmen. Beispielsweise ist eine Erwärmung auf eine Temperatur zwischen 20° C und 50 °C, insbesondere bis zu 160° C vorgesehen.

Die verschiedenen möglichen Positionen für das Heizelement liegen alle im inneren des Drucksensors und werden im Folgenden sind beispielhafte Positionen in einer nicht erschöpfenden Liste aufgeführt:
Das Heizelement kann angeordnet sein
- auf oder in dem Keramiksubstrat (Positionen A und B), wobei das Heizelement hier vorzugsweise in der Nähe der elektrischen Anschlüsse angebracht ist. Das Keramiksubstrat kann auch als Schichtkeramik ausgebildet sein. Das Heizelement kann beispielsweise auf eine Schicht im Inneren oder auf einer Oberfläche des Keramiksubstrats aufgedruckt sein.
- in dem Gehäuse, z.B. innen an der Gehäusewand (Position C), wobei das Heizelement durch Kleben, Klemmen oder Löten in direktem Kontakt zu Bauteilen des Gehäuses steht.
- innerhalb der Gehäusewand (Position D).
- an dem Druckanschlussstutzen (Position E), wobei das Heizelement einen äußeren Abschnitt des Druckanschlussstutzens bedeckt. Das Heizelement kann auch in die Gelbegrenzung integriert sein.

Die verschiedenen Ausführungen des Heizelements können umfassen: Einen leitfähigen Kunststoff, einen z.B. als Mäander geformten Widerstand oder einen Widerstand mit positivem Temperaturkoeffizienten. Der Vorteil einer möglichen Mäanderform des Widerstands ist, dass der Widerstand länger ist und folglich einen höheren Wert hat, was zu einer höheren Heizleistung führt. Mit der Verwendung eines Widerstands mit positiven Temperaturkoeffizienten ist eine externe Regelung einer Heizleistung des Heizelements nicht mehr nötig.

In einer weiteren Ausführungsform ist das Heizelement in das Gehäuse des Sensors integriert und so ausgebildet, dass es Mikrowellen erzeugen und abstrahlen kann, mit denen wahlweise der gesamte Drucksensor, einzelne Bestandteile davon oder die zu messenden Medien erhitzt werden. Dadurch findet die Erwärmung direkt am gewünschten Ort und z.B. im Medium statt und die aufgewendete Heizleistung kann optimaler genutzt werden. Ein derartiges Heizelement kann auch an einer anderen Stelle des Sensors angeordnet sein.

Eine Stromzuführung des Heizelements kann über verschiedene Wege stattfinden. Dabei gibt es z.B. die Möglichkeit über die Stromzufuhr des Drucksensors, als auch die Variante einer zusätzlichen und vom Sensorelement unabhängigen Stromversorgung. Die Separation der Energieversorgung hat den Vorteil, dass die Messsignale durch die Stromzufuhr zum Heizelement nicht beeinträchtigt werden.

Neben dem beschriebenen Heizelement kann der Drucksensor ein weiteres Heizelement in einer der erläuterten Bauformen umfassen. Dieses kann an einer der beschriebenen, aber von der Position des ersten Heizelementes verschiedenen Position angebracht sein. Durch den Einsatz mehrerer Heizelemente kann der Drucksensor homogener und somit effizienter aufgeheizt werden.

Der vorgehend beschriebene Drucktransmitter ist beispielsweise zu einer Verwendung in einem Kraftfahrzeug, insbesondere für einen Einsatz im Abgasbereich eines Kraftfahrzeugs ausgebildet, z.B. im Bereich eines Dieselpartikelsensors oder eines Harnstoffsensors.

Gemäß einem weiteren Aspekt der Erfindung wird ein Verfahren zum Betrieb des vorgehend beschriebenen Drucktransmitters angegeben. Gemäß dem Verfahren wird bei einer Inbetriebnahme des Drucktransmitters das Heizelement zur Aufheizung des Drucktransmitters angeschaltet, bis eine festgesetzte Betriebstemperatur erreicht ist. Bei der festgesetzten Betriebstemperatur erfolgt eine erste Druckmessung. Das Heizelement wird zur Senkung des Energieverbrauchs beispielsweise möglichst wenig im Betrieb des Drucktransmitters zur Heizung eingeschaltet. Beispielsweise wird das Heizelement bei Erreichen der Betriebstemperatur abgeschaltet. Ein Gefrieren des Drucktransmitters wird nachfolgend durch die Motorwärme verhindert. Alternativ ist auch ein dauerhafter Betrieb des Heizelements möglich, um ein Einfrieren während der Fahrt zu verhindern.

Im Folgenden werden die Erfindung und ihre Komponenten anhand einer Auswahl von Ausführungsbeispielen und der dazugehörigen schematischen Figuren näher erläutert.
Figur 1 zeigt die schematische Schnittansicht eines Drucktransmitters mit verschiedenen Positionen für ein oder mehrere Heizelemente und deren relativen Bezug zu anderen Komponenten des Drucktransmitters.
Figur 2 zeigt die schematische Schnittansicht eines Sensorelements.

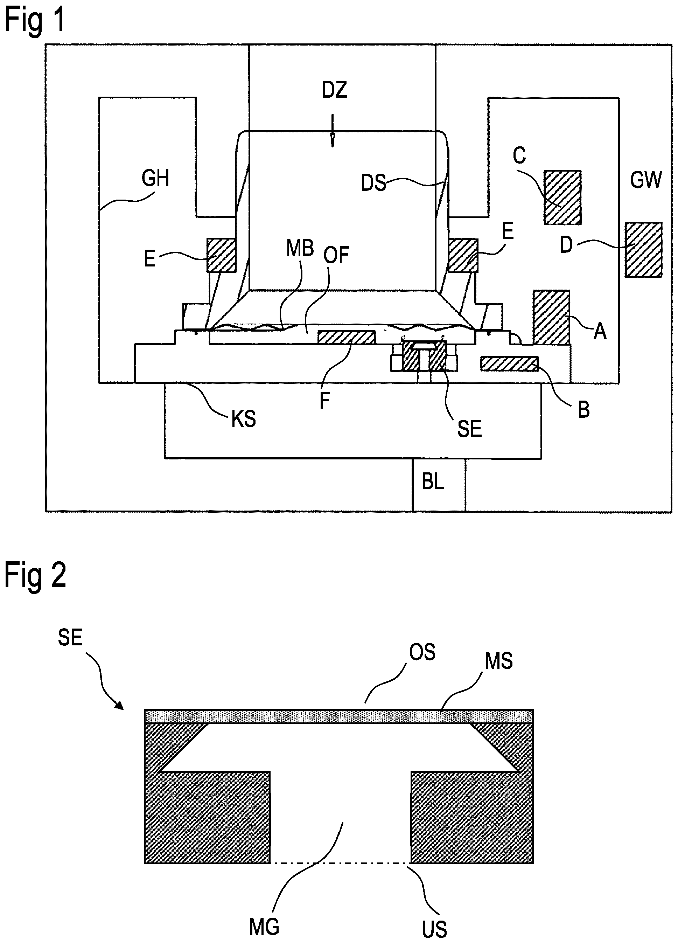

Die in Figur 1 gezeigte Schnittansicht zeigt den schematischen Aufbau eines Drucktransmitters DT. Dieser weist ein Gehäuse GH auf, umfassend eine Gehäusewand GW, ein innerhalb des Gehäuses angeordnetes Keramiksubstrat KS, ein in das Keramiksubstrat eingebettetes Sensorelement SE, eine Membran MB, und einen Druckanschlussstutzen DS. Das Sensorelement befindet sich in einer Aussparung auf dem Keramiksubstrat, die mit der Membran MB überspannt ist. Zwischen der Oberseite des Sensorelements, dem Keramiksubstrat und der Membran ist ein Hohlraum geschaffen, der mit Öl OF gefüllt ist. Über der Membran ist der Druckanschlussstutzen DS angebracht, durch den das Medium auf die Membran MB geleitet wird.

Außerdem sind mehrere verschiedene Varianten zur möglichen Positionierung eines oder mehrerer Heizelemente H, insbesondere an den Positionen A bis F eingezeichnet. Die eingezeichneten beispielhaften Anbringungsorte des Heizelements sind wie folgt: Das Heizelement kann
- in oder auf dem Keramiksubstrat (Positionen A und B),
- in dem Gehäuse, z.B. innen an der Gehäusewand (Position C),
- innerhalb der Gehäusewand (Position D),
- auf dem Druckanschlussstutzen (Positionen E), oder
- in der Aussparung im Öl auf dem Keramiksubstrat (Position F),
angeordnet sein.

Alle Darstellungen des Heizelements und seiner möglichen Positionen sind rein schematisch und stehen in keinem Maßstab zu einander oder zu der Größe der jeweilig dargestellten Bauteile.

Figur 2 zeigt eine vergrößerte Schnittansicht des Sensorelements SE. Hier ist eine Membran des Sensorelements MS zu erkennen, die hier die Oberseite OS des Sensorelements bildet. Der Oberseite gegenüberliegend ist an der Unterseite US des Sensorelements ein Medienzugang MG von unten zur Membran des Sensorelements MS angeordnet.

Die in Figur 1 und 2 dargestellte Form eines Sensorelements ist nur ein beispielhaft und schematisch. Es können auch andere Formen oder Materialien zur Konstruktion eines Drucktransmitterelements verwendet werden.

### Bezeichnungsliste:

- A: Heizelement auf Keramiksubstrat
- B: Heizelement in Keramiksubstrat
- BL: Belüftung
- C: Heizelement im Gehäuse
- D: Heizelement in Gehäusewand
- DS: Druckanschlussstutzen
- DT: Drucktransmitter
- DZ: Druckzufuhr
- E: Heizelement auf Druckanschlussstutzen
- F: Heizelement in Öl
- GH: Gehäuse
- GW: Gehäusewand
- H: Heizelement
- KS: Keramiksubstrat
- MG: Medienzugang
- MS: Membran des Sensorelements
- MB: Membran
- OF: Öl
- OS: Oberseite des Sensorelements
- SE: Sensorelement
- US: Unterseite des Sensorelements

## Patentansprüche

1. Drucktransmitter zur Bestimmung von Differenz-, Relativoder Absolutdruck umfassend,
- ein Gehäuse (GH), umfassend eine Gehäusewand (GW), darin angeordnet
- ein Sensorelement (SE)
- ein Keramiksubstrat (KS), das als Träger des Sensorelements und dessen elektrischen Anschluss dient, sowie
- ein Heizelement (H, A-F) das im Inneren des Gehäuses oder der Gehäusewand (GW) angeordnet ist,
wobei das Sensorelement in einer Transmittereinheit angeordnet ist, die als Aussparung im Keramiksubstrat gestaltet ist und mit einer Membran (MB) überspannt ist, wobei der resultierende Hohlraum (OF) mit Öl gefüllt ist, wobei das Heizelement (H, A-F) in dem Öl der Transmittereinheit an einer Position (F) angeordnet ist,
wobei auf der Transmittereinheit ein Druckanschlussstutzen (DS) angeordnet ist, in dem ein Medium zur Membran (MB) geführt wird, wobei der Druckanschlussstutzen (DS) über der Membran (MB) auf der Aussparung befestigt ist und durch die Gehäusewand (GW) hindurch ragt.

2. Drucktransmitter nach dem vorherigen Anspruch, wobei ein weiteres Heizelement (H, A-F) in einer Position (A) auf oder einer Position (B) in dem Keramiksubstrat (KS) angeordnet ist.

3. Drucktransmitter nach einem der vorherigen Ansprüche, bei dem ein weiteres Heizelement (H, A-F) im Inneren des Gehäuses Position (C) oder in der Gehäusewand Position (D) angeordnet ist.

4. Drucktransmitter nach einem der vorherigen Ansprüche, wobei ein weiteres Heizelement (H, A-F) in einer Position (E) an der Außenseite des Druckanschlussstutzens angeordnet ist.

5. Drucktransmitter nach einem der vorherigen Ansprüche, wobei das Heizelement (H, A-F) einen elektrisch leitfähigen Kunststoff umfasst.

6. Drucktransmitter nach einem der vorherigen Ansprüche, wobei das Heizelement (H, A-F) ein Widerstandselement umfasst, das über einen positiven Temperaturkoeffizienten verfügt.

7. Drucktransmitter nach einem der vorherigen Ansprüche, wobei ein weiteres Heizelement (H, A-F) in Teilen der Gehäusewand in einer Position (D) integriert ist und zum Erzeugen einer Mikrowellenstrahlung geeignet ist.

8. Drucktransmitter nach einem der vorherigen Ansprüche, wobei das Heizelement (H, A-F), mit einer vom Drucktransmitter (DT) separierten, Stromversorgung ausgestattet ist.

9. Drucktransmitter nach einem der vorherigen Ansprüche, wobei das Sensorelement als MEMS Bauteil ausgebildet ist.

10. Drucktransmitter nach einem der vorherigen Ansprüche, mit einem weiteren Heizelement (H, A-F), das an einem vom ersten Heizelement (H, A-F) verschiedenen Ort angeordnet ist und einem der Ansprüche 2 bis 7 genügt.

11. Drucktransmitter nach einem der vorherigen Ansprüche, der zur Messung eines Drucks beim Motorkaltstart in einem Kraftfahrzeug ausgebildet ist, wobei das Heizelement (H, A-F) zur Erwärmung des Drucktransmitters (DT) auf eine festgesetzte Betriebstemperatur ausgebildet ist, bei der eine erste Druckmessung erfolgen kann.

12. Drucktransmitter nach einem der vorherigen Ansprüche, bei dem das Heizelement (H, A-F) zur Erwärmung auf eine Temperatur zwischen 20 °C und 160 °C ausgebildet ist.

13. Verwendung des Drucktransmitters nach einem der vorhergehenden Ansprüche in einem Kraftfahrzeug.

14. Verfahren zum Betrieb des Drucktransmitters nach einem der Ansprüche 1 bis 12,
wobei bei einer Inbetriebnahme des Drucktransmitter (DT) das Heizelement (H, A-F) zur Aufheizung des Drucktransmitters (DT) angeschaltet wird, bis eine festgesetzte Betriebstemperatur erreicht ist.

15. Verfahren nach Anspruch 14,
bei dem das Heizelement (H, A-F) bei Erreichen der Betriebstemperatur abgeschaltet wird.

## Claims

1. Pressure transmitter for determining differential, relative or absolute pressure, comprising,
- a housing (GH), comprising a housing wall (GW), and arranged therein:
- a sensor element (SE)
- a ceramic substrate (KS), which acts as a carrier of the sensor element and of its electrical connection, and
- a heating element (H, A-F), which is arranged inside the housing or the housing wall (GW),
the sensor element being arranged in a transmitter unit, which is configured as a recess in the ceramic substrate and is covered by a membrane (MB), the resulting cavity (OF) being filled with oil, the heating element (H, A-F) being arranged in the oil of the transmitter unit in a position (F),
a pressure connection fitting (DS) being arranged on the transmitter unit and a medium being guided to the membrane (MB) in the said pressure connection fitting (DS), wherein the pressure connection fitting is fastened above the membrane (MB) to the recess and protrudes through the housing wall (GW).

2. Pressure transmitter according to the preceding claim, wherein a further heating element (H, A-F) is arranged in a position (A) on or a position (B) in the ceramic substrate (KS).

3. Pressure transmitter according to any one of the preceding claims, wherein a further heating element (H, A-F) is arranged inside the housing position (C) or in the housing wall position (D).

4. Pressure transmitter according to any one of the preceding claims, wherein a further heating element (H, A-F) is arranged in a position (E) on the outer side of the pressure connection fitting.

5. Pressure transmitter according to any one of the preceding claims, wherein the heating element (H, A-F) comprises an electrically conductive plastic.

6. Pressure transmitter according to any one of the preceding claims, wherein the heating element (H, A-F) comprises a resistive element which has a positive temperature coefficient.

7. Pressure transmitter according to any one of the preceding claims, wherein a further heating element (H, A-F) is integrated into parts of the housing wall in a position (D) and is suitable for generating microwave radiation.

8. Pressure transmitter according to any one of the preceding claims, wherein the heating element (H, A-F), is equipped with an electricity supply separated from the pressure transmitter (DT).

9. Pressure transmitter according to any one of the preceding claims, wherein the sensor element is configured as a MEMS component.

10. Pressure transmitter according to any one of the preceding claims, having a further heating element (H, A-F), which is arranged at a different location than the first heating element (H, A-F) and corresponds to any one of claims 2 to 7.

11. Pressure transmitter according to any one of the preceding claims, which is configured to measure a pressure during an engine cold start in a motor vehicle, the heating element (H, A-F) being configured to heat the pressure transmitter (DT) to a predetermined operating temperature, at which a first pressure measurement can be carried out.

12. Pressure transmitter according to any one of the preceding claims, wherein the heating element (H, A-F) is configured for heating to a temperature of between 20°C and 160°C.

13. Use of the pressure transmitter according to any one of the preceding claims in a motor vehicle.

14. Method for operating the pressure transmitter according to any one of claims 1 to 12,
wherein, during a start-up of the pressure transmitter (DT), the heating element (H, A-F) being turned on in order to heat the pressure transmitter (DT) until a predetermined operating temperature is reached.

15. Method according to claim 14,
wherein the heating element (H, A-F) is turned off when the operating temperature is reached.

## Revendications

1. Transmetteur de pression destiné à déterminer une pression différentielle, relative ou absolue, le transmetteur de pression comprenant
- un boîtier (GH) qui comprend une paroi de boîtier (GW) et à l'intérieur duquel est disposé
- un élément formant capteur (SE)
- un substrat céramique (KS) qui sert de support à l'élément formant capteur et à sa borne électrique, et
- un élément chauffant (H, A-F) qui est disposé à l'intérieur du boîtier ou de la paroi de boîtier (GW), l'élément formant capteur étant disposé dans une unité de transmission qui est conçue comme un évidement ménagé dans le substrat céramique et qui est recouverte par une membrane (MB),
la cavité résultante (OF) étant remplie d'huile, l'élément chauffant (H, A-F) étant disposé dans l'huile de l'unité de transmission à une position (F),
un raccord de pression (DS), dans lequel un milieu est amené à la membrane (MB), étant disposé sur l'unité de transmetteur, le raccord de pression (DS) étant fixé à l'évidement au-dessus de la membrane (MB) et faisant saillie à travers la paroi de boîtier (GW).

2. Transmetteur de pression selon la revendication précédente, un autre élément chauffant (H, A-F) étant disposé dans une position (A) sur ou dans une position (B) dans le substrat céramique (KS).

3. Transmetteur de pression selon l'une des revendications précédentes, dans lequel un autre élément chauffant (H, A-F) est disposé à la position (C) à l'intérieur du boîtier ou à la position (D) dans la paroi de boîtier.

4. Transmetteur de pression selon l'une des revendications précédentes, un autre élément chauffant (H, A-F) étant disposé à une position (E) du côté extérieur du raccord de pression.

5. Transmetteur de pression selon l'une des revendications précédentes, l'élément chauffant (H, A-F) comprenant une matière synthétique électriquement conductrice.

6. Transmetteur de pression selon l'une des revendications précédentes, l'élément chauffant (H, A-F) comprenant un élément résistif ayant un coefficient de température positif.

7. Transmetteur de pression selon l'une des revendications précédentes, un autre élément chauffant (H, A-F) étant intégré à une position (D) dans des parties de la paroi de boîtier et étant approprié pour générer un rayonnement micro-onde.

8. Transmetteur de pression selon l'une des revendications précédentes, l'élément chauffant (H, A-F) étant équipé d'une alimentation en courant distincte du transmetteur de pression (DT).

9. Transmetteur de pression selon l'une des revendications précédentes, l'élément formant capteur étant conçu comme un composant MEMS.

10. Transmetteur de pression selon l'une des revendications précédentes, comprenant un autre élément chauffant (H, A-F) qui est disposé à un emplacement différent de celui du premier élément chauffant (H, A-F) et qui satisfait l'une des revendications 2 à 7.

11. Transmetteur de pression selon l'une des revendications précédentes, qui est conçu pour mesurer une pression lors d'un démarrage à froid d'un moteur dans un véhicule automobile, l'élément chauffant (H, A-F) étant conçu pour chauffer le transmetteur de pression (DT) à une température de fonctionnement définie à laquelle une première mesure de pression peut être effectuée.

12. Transmetteur de pression selon l'une des revendications précédentes, dans lequel l'élément chauffant (H, A-F) est conçu pour chauffer à une température comprise entre 20 °C et 160 °C.

13. Utilisation du transmetteur de pression selon l'une des revendications précédentes dans un véhicule automobile.

14. Procédé de fonctionnement du transmetteur de pression selon l'une des revendications 1 à 12,
dans lequel, lors d'une mise en service du transmetteur de pression (DT), l'élément chauffant (H, A-F) étant activé pour chauffer le transmetteur de pression (DT) jusqu'à ce qu'une température de fonctionnement définie soit atteinte.

15. Procédé selon la revendication 14, dans lequel l'élément chauffant (H, A-F) est désactivé lorsque la température de fonctionnement est atteinte.
